# FASCICULE DE BREVET EUROPEEN

(11) **EP 3 176 558 B1**
(45) Date de publication et mention de la délivrance du brevet: **27.06.2018**
(21) Numéro de dépôt: 16197574.3
(22) Date de dépôt: 07.11.2016
(51) Int. Cl.: G01L 19/08, G01L 19/16, G01D 5/39, G01L 7/04

(54) **MANOMÈTRE AVEC MARQUAGE BIDIRECTIONNEL OU DISTINCTIF APPOSÉ SUR SA VITRE**
MANOMETER MIT BIDIREKTIONALER MARKIERUNG ODER MARKE, DIE AUF SEINEM GLAS BEFESTIGT IST
PRESSURE GAUGE WITH BI-DIRECTIONAL OR DISTINCTIVE MARKING AFFIXED TO THE WINDOW THEREOF

(30) Priorité: 03.12.2015 FR 1561806
(43) Date de publication de la demande: 07.06.2017
(73) Titulaire: L'AIR LIQUIDE, SOCIETE ANONYME POUR L'ETUDE ET L'EXPLOITATION DES PROCEDES GEORGES CLAUDE, 75007 Paris (FR); AIR LIQUIDE SANTE (INTERNATIONAL), 75007 Paris (FR)
(72) Inventeur: QUATTRONE, Michele, 75015 Paris (FR); BLANDIN, Yann, 75010 Paris (FR)
(74) Mandataire: Pittis, Olivier

(56) Documents cités:
- EP-A1- 2 682 725
- WO-A1-2015/136207
- WO-A1-2015/174374
- DE-U1- 20 009 787
- US-A- 3 952 598
- US-A- 4 196 633

## Description

L'invention porte sur un manomètre comprenant un marquage de type code matriciel bidimensionnel ou un motif distinctif encodant une ou plusieurs informations, lequel marquage est porté par une étiquette apposée sur la surface externe de la vitre du manomètre et qui recouvre un orifice de mise à l'air traversant la vitre, ainsi qu'un robinet de distribution de fluide, en particulier de gaz, auquel est fixé un tel manomètre et un récipient de fluide sous pression, telle une bouteille de gaz, équipé d'un tel robinet de distribution de fluide.

Les fluides, tels les gaz industriels et médicaux, sont couramment conditionnés dans des récipients, typiquement des bouteilles de gaz, équipés d'un bloc robinet, avec ou sans détendeur intégré, à savoir un robinet simple de type ouvert/fermé ou un robinet à détendeur intégré, encore appelé RDI, permettant de contrôler débit et pression du gaz délivré.

Afin de mesurer la pression du gaz dans le récipient et de pouvoir déterminer ainsi si le récipient contient encore du gaz ou non, il est habituel d'agencer sur le bloc robinet, un dispositif de mesure de pression, typiquement un manomètre à aiguille mobile en rotation.

Un tel dispositif de mesure de pression affiche la pression du gaz sur un cadran portant des graduations correspondant à des valeurs de pression en vis-à-vis desquelles vient se positionner l'aiguille rotative sous l'effet de la pression du gaz pour indiquer une valeur de pression mesurée.

En particulier, les manomètres anéroïdes utilisent l'élasticité d'une pièce métallique dont la déformation par le fluide sous pression, par exemple la déflection d'un diaphragme ou la variation de courbure d'un tube enroulé, tel un tube de Bourdon, permet de déterminer de manière fidèle la différence de pression appliquée, donc la pression du fluide.

L'utilisateur peut alors lire la pression de gaz dans une bouteille donnée en observant la valeur de pression correspondant à la graduation désignée par l'aiguille, et éventuellement la consigner manuellement dans une base de données de façon associée à la bouteille considéré.

Lorsque l'utilisateur doit gérer un parc comprenant plusieurs récipients de gaz, typiquement plusieurs dizaines ou centaines de bouteilles de gaz, il a été proposé par WO-A-2015/136207, d'utiliser un manomètre comprenant un boitier fermé par une vitre, laquelle vitre protège un cadran portant un marquage de type code bidimensionnel encodant au moins une information donnée. Un indicateur de pression, telle une aiguille rotative, est mobile en rotation par rapport audit cadran. Un ou plusieurs éléments de repérage, comme par exemple un ou des éléments graphiques, servent de position(s) de référence pour positionner l'indicateur de pression dans l'espace.

Un tel manomètre permet d'opérer une lecture automatisée de la valeur de pression mesurée et d'associer, voire de mémoriser ensuite, cette valeur de pression mesurée à un récipient de gaz donné, avantageusement en combinaison avec d'autres informations utiles encodées par le code bidimensionnel, comme le type de gaz contenu dans le récipient considéré, sa limite d'utilisation, le nom du fournisseur...,

Or, le fait de devoir apposer un marquage de type code bidimensionnel encodant au moins une information donnée, par exemple un code QR ou autre, ou un motif distinctif, sur le cadran du manomètre est complexe et coûteux car cela oblige à remplacer tous les cadrans des manomètres ou les manomètres existants par des cadrans revêtu du marquage de type code bidimensionnel ou motif distinctif.

Le problème qui se pose alors est de pouvoir éviter un tel remplacement du cadran ou du manomètre lui-même.

On connait par ailleurs WO-A-2015/174374 qui propose d'apposer une étiquette (tag) RFID sur la surface intérieure ou extérieure de la vitre du manomètre. Cette solution ne permet toutefois pas de résoudre un autre problème lié aux manomètres, à savoir celui de la gestion d'une éventuelle surpression de fluide, en cas de défaillance des mécanismes internes du manomètre.

Le problème à résoudre est donc double, à savoir de pouvoir non seulement remplacer facilement le marquage de manomètres sans avoir à remplacer tous les cadrans des manomètres considérés mais aussi de pouvoir gérer toute surpression éventuelle de fluide, en cas de défaillance des mécanismes internes du manomètre.

La solution de l'invention repose sur un manomètre comprenant un boitier comprenant une vitre transparente, un cadran et un indicateur de pression mobile en rotation par rapport audit cadran, et un marquage comprenant un code bidimensionnel ou un motif distinctif encodant au moins une information donnée, caractérisé en ce que le marquage comprenant le code bidimensionnel ou le motif distinctif est porté par une étiquette apposée sur la surface externe de la vitre du manomètre, et au moins un orifice de mise à l'air traverse la vitre, l'étiquette étant apposée sur ledit au moins un orifice de mise à l'air.

Le (ou les) orifice de mise à l'air traversant la vitre sert à lutter contre les surpressions éventuelles. Ainsi, en cas de rupture du mécanisme interne du manomètre, l'étiquette qui recouvre cet orifice de mise à l'air, se décolle de la vitre sous l'effet de la pression de fluide qui s'exerce dans le boitier, c'est-à-dire dans le logement du boitier située sous la vitre, ce qui permet à la surpression de s'évacuer vers l'extérieur, c'est-à-dire l'atmosphère ambiante, via cet orifice.

De plus, apposer l'étiquette sur la surface externe de la vitre permet d'éviter de remplacer tout le cadran du manomètre lorsque l'étiquette doit être changée, ce qui conduit à des économies notables et à un gain de temps.

Le fait de coller l'étiquette sur cet orifice permet en outre d'éviter les entrées de poussière et d'humidité dans le boitier du manomètre, et donc aussi des opérations de maintenance ou de remplacement du manomètre.

Il existe donc une coopération de l'étiquette et de l'orifice de mise à l'air pour résoudre simultanément plusieurs problèmes distincts et ce, de façon simple, peu onéreuse et efficace.

Selon le cas, le manomètre de l'invention peut comprendre l'une ou plusieurs des caractéristiques techniques suivantes :
- l'étiquette est apposée sur un orifice de mise à l'air.
- l'orifice de mise à l'air permet d'évacuer toute surpression de fluide en cas de rupture du mécanisme interne du manomètre.
- l'étiquette est collée sur la surface externe de la vitre.
- l'étiquette est apposée au centre de la vitre.
- la vitre a une surface externe plate ou bombée et/ou une périphérie circulaire.
- l'étiquette est une feuille.
- l'étiquette est en papier, en métal ou en polymère.
- l'étiquette porte des marquages en couleurs ou en noir et blanc.
- l'étiquette a une forme de disque.
- l'étiquette est autocollante, c'est-à-dire que sa surface de dessous ou inférieure comporte et/ou est recouverte d'au moins un adhésif. Le choix de l'adhésif le plus adapté peut se faire empiriquement en testant plusieurs adhésifs, i.e. colle ou analogue, utilisés pour coller l'étiquette sur l'orifice d'un manomètre et en soumettant ensuite le boitier du manomètre à une surpression gazeuse, comme en cas de rupture du mécanisme interne. Par exemple, l'adhésif peut être choisi en fonction d'une surpression maximum ou minium pouvant survenir en cas de rupture partielle ou totale du mécanisme interne, tel le tube de Bourdon, du manomètre.
- la vitre transparente forme un couvercle transparent permettant de protéger le cadran et l'indicateur de pression mobile en rotation.
- la vitre transparente forme un couvercle surmontant et fermant le boitier.
- la vitre transparente est en verre ou en polymère.
- le boitier a une forme générale cylindrique, c'est-à-dire une section circulaire.
- le cadran et l'indicateur de pression mobile en rotation par rapport audit cadran sont agencés dans le boitier.
- le code bidimensionnel comprend des formes géométriques.
- le code bidimensionnel comprend des disques.
- le code bidimensionnel comprend des polygones, en particulier des carrés.
- le code bidimensionnel comprend des formes géométriques de couleur sombre disposées sur un fond de couleur claire.
- les formes géométriques sont des carrés de couleur noire et le fond de couleur claire est un carré blanc.
- le code bidimensionnel est de type code QR.
- le motif distinctif comprend une ou plusieurs formes géométriques ou non géométriques.
- le motif distinctif comprend une pluralité de vagues de formes et de couleurs différentes, par exemple des vagues de couleur claire et des vagues de couleur foncée, de préférence elles sont imbriquées les uns dans les autres.
- le code bidimensionnel ou le motif distinctif encode une ou plusieurs informations lisibles par un dispositif de lecture numérique, en particulier un téléphone intelligent (i.e. un smartphone) ou une tablette numérique intégrant une caméra et un écran d'affichage de données.
- le code bidimensionnel ou le motif distinctif encode une ou plusieurs informations correspondant à une référence de bouteille de gaz, un numéro d'identification unique, un nom d'utilisateur, un type de gaz, une composition gazeuse, un lien vers un site internet, un nom de fournisseur de gaz, une capacité de la bouteille, une date de péremption du gaz stocké dans la bouteille, un numéro de téléphone à contacter en cas de problème ou toute autre information utile ou désirée.
- le cadran du manomètre est circulaire.
- les formes géométriques sont des disques de couleur contrastée par rapport à la couleur du fond du manomètre, par exemple de couleurs noire et blanche.
- les formes géométriques sont des disques répartis en couronne.
- l'indicateur de pression mobile en rotation est une aiguille.
- l'indicateur de pression est une aiguille longiligne de couleur foncée, en particulier noire.
- l'axe de rotation de l'indicateur de pression est situé au centre du cadran.
- le boitier comprend un mécanisme interne élastique sensible à la pression coopérant avec l'indicateur de pression mobile en rotation, par exemple le mécanisme élastique sensible à la pression est un tube de Bourdon ou un diaphragme.
- le cadran comprend des graduations permettant une lecture directe de la pression par l'utilisateur, sans que le code bidimensionnel ne soit une gêne pour la lecture à l'oeil nu.
- il comprend en outre au moins un élément de repérage
- ledit au moins un élément de repérage est porté par le cadran, l'étiquette ou la vitre.
- alternativement, le marquage comprend au moins un élément de repérage, de préférence plusieurs élément de repérage, encore appelés éléments d'ancrage.
- ledit au moins un élément de repérage est ou comprend une forme géométrique.
- ledit au moins un élément de repérage est ou comprend au moins un point, disque, carré, triangle, polygone, une forme tridimensionnelle, un trait ou toute autre forme.
- ledit au moins un élément de repérage a une forme ou un graphisme servant de position de référence.
- ledit au moins un élément de repérage fait office de point de référence permettant de déterminer une position de l'indicateur de pression par rapport à cet élément de repérage et d'en déduire une pression de gaz. Il qui permet de positionner l'indicateur de pression, c'est-à-dire l'aiguille, dans l'espace.
- il comprend plusieurs éléments de repérage, par exemple plusieurs carrés.
- il comprend entre 1 et 5 éléments de repérage, de préférence entre 1 et 3 éléments de repérage.
- selon un premier mode de réalisation, il comprend au moins un élément de repérage distinct des formes géométriques formant le code bidimensionnel, de préférence un seul élément de repérage, en particulier un élément graphique.
- selon un deuxième mode de réalisation, il comprend au moins un élément de repérage faisant partie des formes géométriques formant le code bidimensionnel, en particulier un code bidimensionnel de type QR code.
- selon un troisième mode de réalisation, il comprend au moins un élément de repérage faisant partie ou distinct du motif distinctif.
- l'étiquette porte une icône ou un graphisme incitant l'utilisateur à scanner le manomètre et/ou l'étiquette avec un dispositif de lecture adapté, tel un téléphone intelligent.
- l'étiquette est conçue pour se décoller, au moins partiellement, de la vitre sous l'effet de la pression de fluide, notamment en cas de rupture du mécanisme interne du manomètre, tel un tube de Bourdon. Ceci peut se faire notamment en choisissant un adhésif pour coller l'étiquette qui adhère suffisamment pour que l'étiquette reste en place en l'absence de surpression gazeuse, c'est-à-dire en utilisation normale, mais pas trop pour autoriser son décollement, au moins partiel, en cas de rupture du mécanisme interne du manomètre, c'est-à-dire en cas de surpression gazeuse.
- l'étiquette est conçue pour se décoller partiellement de la vitre, sous l'effet de la pression de fluide, en se soulevant pour créer un passage de fluide entre la surface encollée de l'étiquette et la surface externe de la vitre permettant ainsi à la surpression gazeuse de s'échapper de l'orifice et de s'évacuer vers l'atmosphère. En effet, l'étiquette n'a pas besoin de se décoller totalement. Un décollage seulement partiel de celle-ci apte à libérer la surpression est amplement suffisant, par exemple l'étiquette peut simplement se soulever pour créer un passage de fluide entre la surface encollée de l'étiquette et la surface externe de la vitre permettant à la surpression gazeuse de s'échapper de l'orifice et de s'évacuer vers l'atmosphère.

L'invention concerne par ailleurs un bloc robinet de distribution de fluide, en particulier de gaz, comprenant un manomètre selon l'invention, de préférence un bloc robinet à détendeur intégré.

L'invention concerne aussi un ensemble de distribution de fluide, en particulier de gaz, comprenant un récipient de gaz, telle une bouteille de gaz, auquel est fixé un bloc robinet de distribution de fluide équipé d'un manomètre, caractérisé en ce que le bloc robinet de distribution de fluide est un bloc robinet selon l'invention. De préférence, le bloc robinet est protégé par un capotage de protection.

Un tel ensemble de distribution de fluide et/ou d'un tel bloc robinet parfaitement adaptés à une utilisation pour distribuer un fluide sous pression, en particulier du gaz à une pression allant jusqu'à 350 bar, ou plus.

L'invention va maintenant être mieux comprise grâce à la description détaillée suivante, faite à titre illustratif mais non limitatif, en référence à :
- la Figure 1 qui représente un mode de réalisation d'un manomètre selon l'invention,
- la Figure 2 qui est un schéma (vu en coupe) du manomètre de la Figure 1, et
- la Figure 3 représente un mode de réalisation d'un motif distinctif encodant une ou plusieurs informations utilisable dans le cadre de la présente invention.

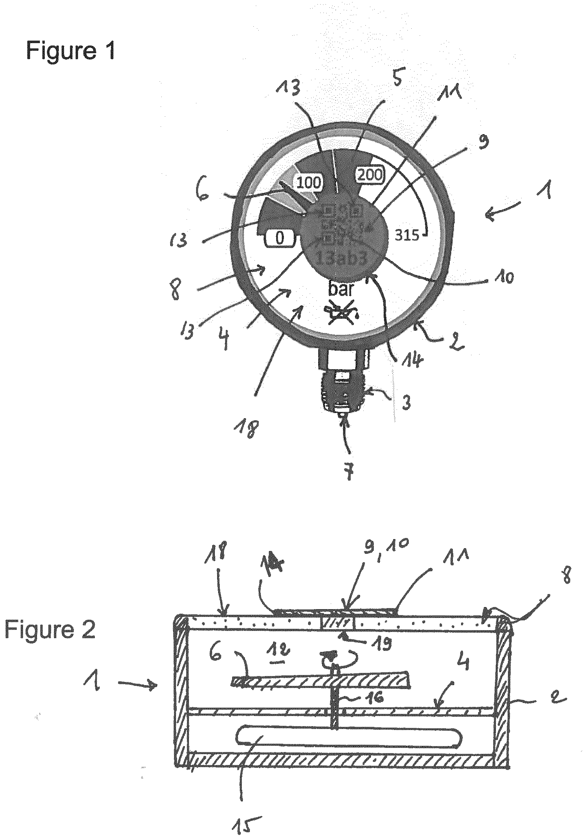

Le manomètre 1 représenté sur les Figures 1 et 2 comprend un boitier 2 rigide, par exemple en métal ou en plastique, ayant une forme général de coupelle, lequel est muni d'un embout de fixation 3 fileté servant à visser le manomètre 1 sur un bloc robinet, avec ou sans détendeur intégré, lui-même monté sur un récipient de fluide, telle une bouteille de gaz, ou sur tout autre dispositif véhiculant un fluide, telle une canalisation de gaz, de manière à pouvoir mesurer la pression du fluide, typiquement du gaz.

Le boitier 2 contient un mécanisme élastique interne 15 (Fig. 2) sensible à la pression coopérant avec un indicateur de pression mobile en rotation 6, à savoir généralement une aiguille mobile en rotation autour d'un axe de rotation 16 situé habituellement au centre d'un cadran 4, ici en forme de disque, c'est-à-dire de périphérie circulaire, portant des graduations ou des plages de valeurs 5, notamment des zones colorées, correspondant à des valeurs ou des plages de valeurs de pression, par exemple ici des valeurs de pressions comprises entre 0 et 315 bar.

L'indicateur de pression 6 est préférentiellement une aiguille longiligne de couleur foncée, en particulier noire.

Le mécanisme élastique 15 sensible à la pression est par exemple un tube de Bourdon ou un diaphragme. Ce type de mécanisme élastique 15 équipe habituellement les manomètres anéroïdes qui utilisent l'élasticité d'une pièce métallique dont la déformation par le fluide sous pression, par exemple la déflection d'un diaphragme ou la variation de courbure d'un tube enroulé, i.e. un tube de Bourdon, permet de déterminer de manière fidèle la différence de pression appliquée, donc la pression du fluide.

L'entrée ou prise de pression se fait au niveau de l'embout 3 qui est traversé par un conduit interne de prise de pression 7 coopérant avec le mécanisme élastique 15 interne, sensible à la pression. La pression du gaz mesurée par le manomètre 1 peut être lue par l'utilisateur sur le cadran 4 étant donné que l'aiguille 6 rotative vient se positionner, sous l'effet de la pression du fluide, vis-à-vis de la graduation ou plage de valeurs 5 correspondant à la valeur de pression de fluide mesurée.

Le cadran 4 et l'aiguille 6 sont agencés dans le volume interne 12 du boitier 2 et sont protégés par une vitre 8 transparente venant les recouvrir. La vitre 8 est fixée au boitier 2 et forme un couvercle transparent recouvrant le haut du boitier 2, c'est-à-dire au dessus du volume interne 12 du boitier 2.

La vitre 8 est en verre ou en polymère, c'est-à-dire en plastique, et a une surface externe 18 plate ou bombée, de préférence plate. La vitre 8 fait face au cadran 4. De préférence, le plan de la vitre 8 et le plan du cadran sont parallèles ou quasi-parallèles l'un à l'autre.

Un marquage 9 comprenant un code bidimensionnel 10 ou un motif distinctif 20 encodant au moins une information donnée est apposé sur le dessus de la vitre 8, c'est-à-dire sur sa surface externe 18. Le code bidimensionnel 10 ou le motif distinctif 20 du marquage 9 peut être imprimé, collé, sérigraphié ou déposé par toute autre technique sur la vitre 8.

Toutefois, le marquage 9 comprenant le code bidimensionnel 10 ou le motif distinctif 20 est avantageusement porté par une étiquette 11, de préférence autocollante. En effet, une telle étiquette 11 est particulièrement simple à fabriquer et à mettre en place sur la vitre 8 de tout manomètre 1.

Dans ce cas, l'étiquette 11 est avantageusement une feuille ayant une forme de disque, c'est-à-dire une périphérie 14 circulaire ; toutefois, elle pourrait avoir une forme différente.

L'étiquette 11 est collée au centre de la surface externe 18 de la vitre 8, comme illustré sur les Figures, car cette position centrale permet d'avoir une étiquette bien visible lorsqu'on regarde le manomètre et ne dérange pas la lecture des informations délivrées par le manomètre lui-même, e.g. la pression du gaz, car la partie centrale d'un manomètre donne rarement des indications. En d'autres termes, l'étiquette 11 et la vitre 8 sont coaxiales puisque la vitre 4 a également une forme de disque de périphérie circulaire.

Par ailleurs, l'étiquette 11 peut aussi porter une icône ou un graphisme incitant l'utilisateur à scanner le manomètre 1 et/ou l'étiquette 11, par exemple avec un téléphone intelligent ou tout autre dispositif de lecture adapté, pour recueillir une ou des informations d'intérêt pour lui, notamment la pression ou tout autre information encodée par l'étiquette 11.

En outre, selon l'invention, le manomètre 1 comporte un (ou plusieurs) orifice 19 de mise à l'air (cf. Fig. 1) traversant la vitre 8, l'étiquette 11 étant apposée, c'est-à-dire collée, de manière à recouvrir cet orifice 19 de mise à l'air. Cet orifice 19 permet d'évacuer la surpression de fluide vers l'atmosphère ambiante en cas de défaillance des mécanismes internes du manomètre 1. Le fait d'apposer l'étiquette 11 sur cet orifice permet aussi d'éviter les entrées de poussière et d'humidité dans le manomètre. En cas de rupture du mécanisme interne du manomètre 1, tel un tube de Bourdon, l'étiquette 11 se décolle au moins partiellement de la vitre 8 sous l'effet de la pression de fluide et permet à la surpression de s'évacuer vers l'extérieur, via l'orifice 19.

Ceci est particulièrement avantageux car l'étiquette 11 permet, en l'absence de surpression, d'empêcher les entrées de poussières ou autre dans le boitier du manomètre 1, via l'orifice 19, alors qu'elle est conçue pour cependant se décoller, au moins partiellement, sous l'effet d'une surpression de gaz et protéger ainsi le manomètre 1, en cas de rupture du mécanisme interne du manomètre 1, en libérant l'orifice 19 par lequel la surpression gazeuse peut s'évacuer à l'atmosphère. Un décollement partiel de l'étiquette 11 s'opère sous l'effet de la pression de fluide. L'étiquette 11 se soulève alors suffisamment pour créer un passage de fluide entre la surface encollée de l'étiquette, c'est-à-dire sa surface du dessous ou inférieure, et la surface externe 18 de la vitre 8 de manière à permettre alors à la surpression gazeuse de sortir du boitier du manomètre 1 en traversant l'orifice 19 et de s'évacuer ensuite vers l'atmosphère, ce qui éviter une détérioration plus importante du manomètre 1.

Par ailleurs, le code bidimensionnel 10 du marquage 9 comprend préférentiellement des formes géométriques, à savoir ici une multitude de disques ou de carrés de petites dimensions, dont l'organisation et le nombre encodent la ou les informations données.

Ainsi, sur la Figure 1, les formes géométriques formant le code bidimensionnel 10 sont des carrés de petite taille et de couleur noire qui sont répartis sur un fond de couleur contrastée par rapport aux couleurs du fond du cadran, typiquement de couleur blanche ou noire. Ce type de code bidimensionnel 10 est appelé code QR.

La présente invention n'est cependant pas limitée à ce type de code bidimensionnel 10 et tout autre code bidimensionnel 10 adapté à une lecture par un appareil de lecture optique comme un téléphone intelligent ou analogue convient dans le cadre de l'invention.

Ainsi, le document WO-A-2015/136207 donne des exemples de codes bidimensionnels 10 pouvant être portés par l'étiquette 11 apposée sur la vitre 8 du manomètre 1 de l'invention.

De là, selon un autre mode de réalisation possible, les formes géométriques du code bidimensionnel 10 formant le marquage 9 peuvent être des disques, de couleurs claire et/ou foncée, par exemple de couleur noire et de couleur blanche.

De plus, selon un autre mode de réalisation, le marquage 9 peut être formé d'un motif distinctif 20 qui peuvent être des formes géométriques et/ou des formes non-géométriques ou tout autre dessin encodant une ou des informations.

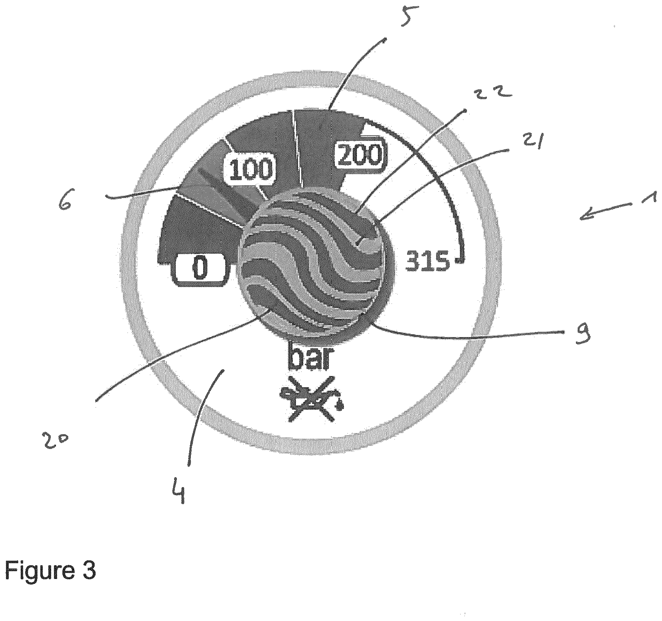

Ainsi, il peut par exemple comprendre des bandes de couleurs et de formes différentes, par exemple sous forme de vagues claires 21 et foncées 22 imbriquées les uns dans les autres, tel qu'illustré en Figure 3. Bien entendu, d'autres représentations sont également utilisables dès lors qu'elles peuvent encoder une ou des informations.

Dans tous les cas, les formes géométriques et/ou non formant le code bidimensionnel 10 ou le motif distinctif 20 peuvent occuper toute la surface de l'étiquette 11 ou alors seulement une partie de celle-ci. De même, ils peuvent être concentrés sur un site particulier de l'étiquette 11, par exemple essentiellement au centre de l'étiquette 11, ou alors répartis sur toute ou partie de sa périphérie.

A noter que l'étiquette 11 peut comprendre un ou d'autres signes, logos, marques, dessins, pictogrammes, chiffres, lettres....etc... comme ici l'annotation « 13ab3 » en Figure 1.

Optionnellement, le manomètre 1 peut également comprendre un ou plusieurs éléments de repérage 13, servant de position de référence permettant de positionner l'indicateur de pression 6, c'est-à-dire l'aiguille rotative, sur le cadran et de déterminer ainsi une position angulaire de l'indicateur de pression 6 par rapport à ce ou ces éléments de repérage 13 pour en déduire une pression de gaz et éventuellement une autonomie ensuite, comme expliqué par le document WO-A-2015/136207.

Cet (ou ces) élément(s) de repérage 13, encore appelé élément d'ancrage, tel un (ou des) élément graphique, peut être porté soit par l'étiquette 11 elle-même, notamment faire partie du marquage 9, soit par la vitre 8, soit par le cadran 4.

Le (ou les) élément de repérage 13 est donc soit distinct des formes constituant le code bidimensionnel 10 ou le motif distinctif 20, soit en faire partie.

La présence d'un (ou plusieurs) tel élément de repérage 13 est particulièrement importante pour pouvoir automatiser la lecture d'une valeur de pression s'affichant sur le cadran 4 du manomètre 1, comme détaillé par WO-A-2015/136207, puisqu'il sert de position de référence permettant de positionner l'aiguille 6 dans l'espace.

D'une façon générale et quel que soit le mode de réalisation considéré, la ou les informations données encodées par le code bidimensionnel 10 ou le motif distinctif 20 du marquage 9 correspondent par exemple à une référence de bouteille de gaz, un nom d'utilisateur, un type de gaz, une composition gazeuse, une contenance de bouteille, un lien vers un site internet, un nom de fournisseur de gaz, une date de péremption du gaz stockée dans la bouteille, un numéro de téléphone à contacter en cas de problème ou toute autre information utile.

Disposer un tel marquage 9 à code bidimensionnel 10 ou motif distinctif 20 sur un manomètre 1 est particulièrement avantageux car cela facilite la gestion des parcs de bouteilles de gaz ou autres, et donne davantage d'informations qu'uniquement la pression de fluide.

La lecture et le décrypter/décodage du marquage 9 à code bidimensionnel 10 ou du motif distinctif 20 peut se faire au moyen d'un dispositif de lecture numérique approprié muni d'une caméra, par exemple un téléphone intelligent, tablette numérique ou analogue mettant en oeuvre une application ou un logiciel dédié de lecture et décryptage du code bidirectionnel 10 considéré, notamment d'un code QR, par exemple module de lecture de code Manatee Works Barcode Scanne SDK fonctionnant sous environnement Android™, IOs, ou Windows Mobile.

La valeur de pression déterminée peut être mémorisée associée à la (ou aux) information encodée par le code bidimensionnel 9 et décodée comme expliqué ci-avant.

Bien entendu, tout ou partie des informations, images ou autres données, peut être mémorisée et/ou affichée sur un écran d'affichage de données, tel l'écran d'un téléphone intelligent ou d'une tablette numérique.

Le manomètre 1 de l'invention est utilisable pour mesurer la pression d'un fluide sous pression, en particulier d'un gaz, stocké dans un récipient, telle une bouteille de gaz, ou véhiculé par une canalisation de fluide, tel un conduit de gaz, ce qui est particulièrement utile pour opérer une gestion efficace d'un parc de récipients de gaz, telles des bouteilles de gaz.

## Revendications

1. Manomètre (1) comprenant un boitier (2) comprenant une vitre (8) transparente, un cadran (4) et un indicateur de pression (6) mobile en rotation par rapport audit cadran (4), et un marquage (9) comprenant un code bidimensionnel (10) ou un motif distinctif (20) encodant au moins une information donnée, **caractérisé en ce que** le marquage (9) comprenant le code bidimensionnel (10) ou le motif distinctif (20) est porté par une étiquette (11) apposée sur la surface externe (18) de la vitre (8) du manomètre (1), et au moins un orifice de mise à l'air (19) traverse la vitre (8), l'étiquette (11) étant apposée sur ledit au moins un orifice de mise à l'air (19).

2. Manomètre selon la revendication précédente, **caractérisé en ce que** l'étiquette (11) est apposée au centre de la vitre (8).

3. Manomètre selon l'une des revendications précédentes, **caractérisé en ce que** l'étiquette (11) est collée sur la surface externe (18) de la vitre (8).

4. Manomètre selon l'une des revendications précédentes, **caractérisé en ce que** l'étiquette (11) est une feuille.

5. Manomètre selon l'une des revendications précédentes, **caractérisé en ce que** la vitre (8) transparente forme un couvercle transparent surmontant et fermant le boitier (2), et protégeant le cadran (4) et l'indicateur de pression (6).

6. Manomètre selon l'une des revendications précédentes, **caractérisé en ce que** la vitre (8) transparente est en verre ou en polymère.

7. Manomètre selon l'une des revendications précédentes, **caractérisé en ce que** l'étiquette (11) a une forme de disque.

8. Manomètre selon l'une des revendications précédentes, **caractérisé en ce que** l'étiquette (11) porte une icône ou un graphisme incitant l'utilisateur à scanner le manomètre (1) et/ou l'étiquette (11) avec un dispositif de lecture adapté, tel un téléphone intelligent.

9. Manomètre selon l'une des revendications précédentes, **caractérisé en ce que** l'étiquette (11) est conçue pour se décoller au moins partiellement de la vitre (8) sous l'effet de la pression de fluide, notamment en cas de rupture du mécanisme interne du manomètre (1).

10. Manomètre selon l'une des revendications précédentes, **caractérisé en ce que** l'étiquette (11) est conçue pour se décoller partiellement de la vitre (8), sous l'effet de la pression de fluide, en se soulevant pour créer un passage de fluide entre la surface encollée de l'étiquette (11) et la surface externe de la vitre (8) permettant ainsi à la surpression gazeuse de s'échapper de l'orifice (19) et de s'évacuer vers l'atmosphère.

11. Manomètre selon l'une des revendications précédentes, **caractérisé en ce que** l'étiquette (11) est en papier, en métal ou en polymère.

12. Bloc robinet de distribution de fluide, en particulier de gaz, comprenant un manomètre (1) selon l'une des revendications précédentes, de préférence un bloc robinet à détendeur intégré.

13. Ensemble de distribution de fluide, en particulier de gaz, comprenant un récipient de fluide, telle une bouteille de gaz, auquel est fixé un bloc robinet de distribution de fluide équipé d'un manomètre (1), **caractérisé en ce que** le bloc robinet de distribution de fluide est un bloc robinet selon la revendication 12.

14. Utilisation d'un ensemble de distribution de fluide selon la revendication 13 ou d'un bloc robinet selon la revendication 12 pour distribuer un fluide sous pression, en particulier du gaz.

## Patentansprüche

1. Druckmessgerät (1), das ein Gehäuse (2) umfasst, das ein durchsichtiges Fenster (8), ein Zifferblatt (4) und einen Druckanzeiger (6) umfasst, der in Bezug auf das Zifferblatt (4) drehbar ist, und eine Markierung (9), die einen zweidimensionalen Code (10) oder ein unterscheidendes Motiv (20), in dem mindestens eine gegebene Information verschlüsselt ist, umfasst, **dadurch gekennzeichnet, dass** die Markierung (9), die den zweidimensionalen Code (10) oder das unterscheidende Motiv (20) umfasst, von einem Etikett (11) getragen wird, das auf der Außenfläche (18) des Fensters (8) des Druckmessgeräts (1) angebracht ist, und mindestens eine Entlüftungsöffnung (19) das Fenster (8) durchsetzt, wobei das Etikett (11) auf der mindestens einen Entlüftungsöffnung (19) angebracht ist.

2. Druckmessgerät nach dem vorstehenden Anspruch, **dadurch gekennzeichnet, dass** das Etikett (11) in der Mitte des Fensters (8) angebracht ist.

3. Druckmessgerät nach einem der vorstehenden Ansprüche, **dadurch gekennzeichnet, dass** das Etikett (11) auf der Außenfläche (18) des Fensters (8) aufgeklebt ist.

4. Druckmessgerät nach einem der vorstehenden Ansprüche, **dadurch gekennzeichnet, dass** das Etikett (11) ein Blatt ist.

5. Druckmessgerät nach einem der vorstehenden Ansprüche, **dadurch gekennzeichnet, dass** das durchsichtige Fenster (8) einen durchsichtigen Deckel bildet, der über dem Gehäuse (2) liegt und es verschließt, und der das Zifferblatt (4) und den Druckanzeiger (6) schützt.

6. Druckmessgerät nach einem der vorstehenden Ansprüche, **dadurch gekennzeichnet, dass** das durchsichtige Fenster (8) aus Glas oder aus Polymer hergestellt ist.

7. Druckmessgerät nach einem der vorstehenden Ansprüche, **dadurch gekennzeichnet, dass** das Etikett (11) die Form einer Scheibe aufweist.

8. Druckmessgerät nach einem der vorstehenden Ansprüche, **dadurch gekennzeichnet, dass** das Etikett (11) ein Symbol oder eine Grafik trägt, die den Benutzer dazu bewegen, das Druckmessgerät (1) und/oder das Etikett (11) mit einer geeigneten Lesevorrichtung, wie etwa einem Smartphone, zu scannen.

9. Druckmessgerät nach einem der vorstehenden Ansprüche, **dadurch gekennzeichnet, dass** das Etikett (11) ausgelegt ist, sich unter Einwirkung des Fluiddrucks mindestens teilweise von dem Fenster (8) abzulösen, insbesondere im Fall eines Bruchs des internen Mechanismus des Druckmessgeräts (1).

10. Druckmessgerät nach einem der vorstehenden Ansprüche, **dadurch gekennzeichnet, dass** das Etikett (11) ausgelegt ist, sich unter Einwirkung des Fluiddrucks teilweise von dem Fenster (8) abzulösen, indem es angehoben wird, um einen Fluiddurchlass zwischen der Klebefläche des Etiketts (11) und der Außenfläche des Fensters (8) zu erzeugen, wodurch es dem Gasüberdruck ermöglicht wird, durch die Öffnung (19) zu entweichen und in die Atmosphäre auszutreten.

11. Druckmessgerät nach einem der vorstehenden Ansprüche, **dadurch gekennzeichnet, dass** das Etikett (11) aus Papier, aus Metall oder aus Polymer hergestellt ist.

12. Hahnblock zur Abgabe eines Fluids, insbesondere von Gas, umfassend ein Druckmessgerät (1) nach einem der vorstehenden Ansprüche, vorzugsweise ein Hahnblock mit eingebautem Druckminderer.

13. Einheit zur Abgabe eines Fluids, insbesondere von Gas, umfassend einen Fluidbehälter, wie etwa eine Gasflasche, an dem ein Hahnblock zur Abgabe eines Fluids, der mit einem Druckmessgerät (1) ausgestattet ist, befestigt ist, **dadurch gekennzeichnet, dass** der Hahnblock zur Abgabe eines Fluids ein Hahnblock nach Anspruch 12 ist.

14. Benutzung einer Einheit zur Abgabe eines Fluids nach Anspruch 13 oder eines Hahnblocks nach Anspruch 12 für die Abgabe eines druckbeaufschlagten Fluids, insbesondere von Gas.

## Claims

1. Pressure gauge (1) comprising a housing (2) comprising a window (8) which is transparent, a dial (4) and a pressure indicator (6) rotatable relative to said dial (4), and a marking (9) comprising a two-dimensional code (10) or a distinctive pattern (20) encoding at least one given piece of information, **characterised in that** the marking (9) comprising the two-dimensional code (10) or the distinctive pattern (20) is carried by a label (11) affixed to the outer surface (18) of the window (8) of the pressure gauge (1), and at least one vent port (19) through the window (8), with the label (11) being affixed to said at least one vent port (19).

2. Pressure gauge as claimed in the preceding claim, **characterised in that** the label (11) is affixed to the centre of the window (8).

3. Pressure gauge according to one of the preceding claims, **characterised in that** the label (11) is affixed to the outer surface (18) of the window (8).

4. Pressure gauge according to one of the preceding claims, **characterised in that** the label (11) is a sheet.

5. Pressure gauge according to one of the preceding claims, **characterised in that** the transparent window (8) forms a transparent cover overmounting and closing the housing (2), and protecting the dial (4) and the pressure indicator (6).

6. Pressure gauge according to one of the preceding claims, **characterised in that** the transparent window (8) is made of glass or polymer.

7. Pressure gauge according to one of the preceding claims, **characterised in that** the label (11) has the shape of a disc.

8. Pressure gauge according to one of the preceding claims, **characterised in that** the label (11) bears an icon or graphic that encourages the user to scan the pressure gauge (1) and/or the label (11) with a suitable reading device, such as a smartphone.

9. Pressure gauge according to one of the preceding claims, **characterised in that** the label (11) is designed to be detached at least partially from the window (8) under the effect of the fluid pressure, in particular in the case of a rupture of the internal mechanism of the pressure gauge (1).

10. Pressure gauge according to one of the preceding claims, **characterised in that** the label (11) is designed to be detached at least partially from the window (8), under the effect of the fluid pressure, by being lifted up in order to create a passage of fluid between the affixed surface of the label (11) and the outer surface of the window (8) allowing as such for the gas overpressure to escape from the port (19) and to be vented to the atmosphere.

11. Pressure gauge according to one of the preceding claims, **characterised in that** the label (11) is made of paper, metal or polymer.

12. Fluid dispensing valve block, in particular gas, comprising a pressure gauge (1) according to one of the preceding claims, preferably a valve block with built-in regulator.

13. Assembly for dispensing fluid, in particular gas, comprising a fluid container, such as a gas cylinder, to which is fastened a fluid dispensing valve block provided with a pressure gauge (1), **characterised in that** the fluid dispensing valve block is a valve block according to claim 12.

14. Use of an assembly for dispensing fluid according to claim 13 or of a valve block according to claim 12 for dispensing a fluid under pressure, in particular gas.
